# EUROPEAN PATENT APPLICATION

(11) **EP 3 723 353 A1**
(43) Date of publication of application: **14.10.2020**
(21) Application number: 19736016.7
(22) Date of filing: 02.01.2019
(51) Int. Cl.: H04M 1/725

(54) **INFORMATION PROCESSING METHOD AND DEVICE, TERMINAL, AND STORAGE MEDIUM**

(30) Priority: 05.01.2018 CN 201810012269
(71) Applicant: ZTE Corporation, Shenzhen, Guangdong 518057 (CN)
(72) Inventor: TANG, Zhengbo, Shenzhen, Guangdong 518057 (CN); WAN, Di, Shenzhen, Guangdong 518057 (CN); ZHANG, Baisheng, Shenzhen, Guangdong 518057 (CN)
(74) Representative: Baudler, Ron
(86) International application number: PCT/CN2019/070053
(87) International publication number: WO 2019/134638

(57) **Abstract**

The present invention provides a terminal, an information processing method and device, a storage medium, and a processor. The terminal comprises: a configuration module (20) and a privacy protection module (22). The configuration module (20) is provided with a first-level switch (200) and a second-level switch (202). When the first-level switch (200) is started, a display mode of the terminal is set as a double screen mirror mode. The second-level switch (202) is configured to enable or disable a privacy protection function when the first-level switch (200) is started. The privacy protection module (22) is connected to the second-level switch (202), and is configured to protect privacy information of the terminal on the basis of the privacy protection function when the second-level switch (202) is started.

## Description

### TECHNICAL FIELD

The present disclosure relates to the field of communications.

### BACKGROUND

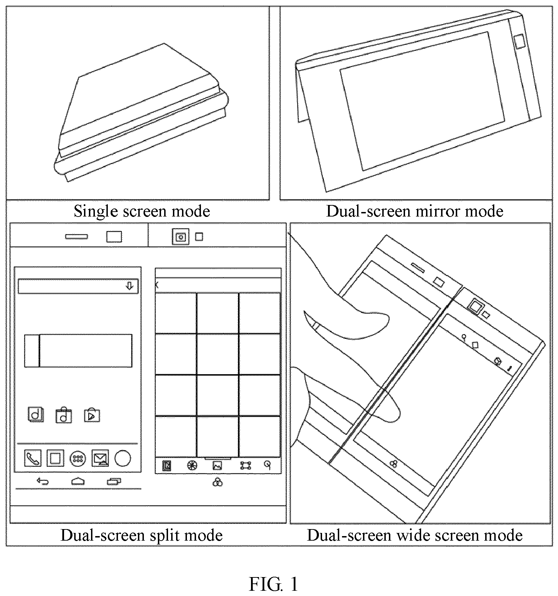

Current dual-screen mobile phones may have four display modes: a single screen mode, a dual-screen mirror mode, a dual-screen split mode and a dual-screen wide screen mode. FIG 1 is a schematic diagram of the four display modes. In the dual-screen mirror mode in which contents may be shared with other people, a user often does not want other people to see some privacy information, such as an incoming call, a message, a message prompt, and the like. Therefore, a terminal in the dual-screen mirror mode may have a problem of leaked privacy information.

In view of the above technical problem, no effective solution has been proposed.

### SUMMARY

According to an embodiment of the disclosure, there is provided a terminal, including: a setting module and a privacy protection module, where the setting module is provided with a first-level switch and a second-level switch, under a condition that the first-level switch is turned on, a display mode of the terminal is set to a dual-screen mirror mode, and the second-level switch is configured to enable or disable a privacy protection function under the condition that the first-level switch is turned on; and the privacy protection module is connected to the second-level switch and configured to protect privacy information in the terminal based on the privacy protection function under a condition that the second-level switch is turned on.

According to an embodiment of the disclosure, there is provided an information processing method, including: receiving a first signal indicating that a first-level switch of a terminal is turned on, where after the first-level switch is turned on, a display mode of the terminal is set to a dual-screen mirror mode; receiving a second signal indicating that a second-level switch of the terminal is turned on, where after the second-level switch is turned on, a privacy protection function of the terminal is enabled, and the second-level switch is effective under a condition that the first-level switch is turned on; and protecting privacy information in the terminal based on the privacy protection function.

According to an embodiment of the disclosure, there is provided an information processing device, including: a first receiving module configured to receive a first signal indicating that a first-level switch of a terminal is turned on, where after the first-level switch is turned on, a display mode of the terminal is set to a dual-screen mirror mode; a second receiving module configured to receive a second signal indicating that a second-level switch of the terminal is turned on, where after the second-level switch is turned on, a privacy protection function of the terminal is enabled, and the second-level switch is effective under a condition that the first-level switch is turned on; and a protection module configured to protect privacy information in the terminal based on the privacy protection function.

According to an embodiment of the disclosure, there is provided a storage medium including a program stored thereon which, when executed by a processor, causes the processor to implement the method according to an embodiment of the present disclosure.

According to an embodiment of the disclosure, there is provided a processor for executing a program, where the program, when executed by the processor, causes the processor to implement the method according to an embodiment of the present disclosure.

### BRIEF DESCRIPTION OF THE DRAWINGS

The drawings described herein are intended to provide a further understanding of the present disclosure, and are intended to be a part of the present disclosure. The exemplary embodiments of the present disclosure and the description thereof are for explaining the present disclosure and do not constitute an undue limitation of the present disclosure. In the drawings:
FIG. 1 is a schematic diagram of four display modes in some cases;
FIG. 2 is a structural block diagram of a terminal according to an embodiment of the present disclosure;
FIG. 3 is a structural block diagram of hardware in a mobile terminal implementing an information processing method according to an embodiment of the present disclosure;
FIG. 4 is a flowchart of an information processing method according to an embodiment of the present disclosure;
FIG. 5 is a structural block diagram of an information processing device according to an embodiment of the present disclosure;
FIG. 6 is a structural block diagram of a terminal provided according to another embodiment of the present disclosure; and
FIG. 7 is a schematic flowchart of an information processing method according to another embodiment of the present disclosure.

### DETAILED DESCRIPTION

The disclosure will be described in detail below with reference to the drawings in conjunction with the embodiments. It should be noted that the embodiments of the disclosure and features therein may be combined with each other in any manner as long as they are not contradictory.

It should be noted that terms "first", "second", and the like in the description, claims and drawings of the disclosure are used for the purpose of distinguishing similar objects instead of indicating a specific order or sequence.

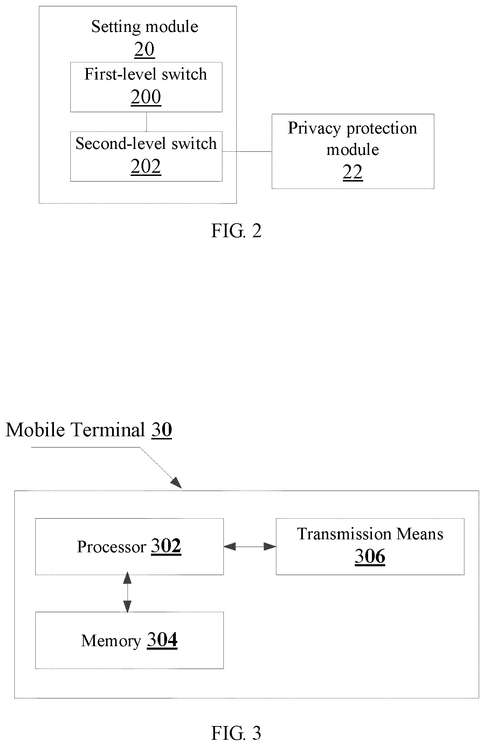

In an embodiment of the present disclosure, there is provided a terminal, which may be a dual-screen terminal. The terminal may have four display modes: a single screen mode, a dual-screen mirror mode, a dual-screen split mode and a dual-screen wide screen mode. The embodiments of the present disclosure are applicable to privacy information protection of the dual-screen terminal in the dual-screen mirror mode. FIG. 2 is a structural block diagram of a terminal according to an embodiment of the present disclosure. As shown in FIG. 2, the terminal includes: a setting module 20 and a privacy protection module 22. The setting module 20 is provided with a first-level switch 200 and a second-level switch 202. Under a condition that the first-level switch 200 is turned on, a display mode of the terminal is set to a dual-screen mirror mode, and the second-level switch 202 is configured to enable or disable a privacy protection function under the condition that the first-level switch 200 is turned on. The privacy protection module 22 is connected to the second-level switch 202 and configured to protect privacy information in the terminal based on the privacy protection function under a condition that the second-level switch 202 is turned on.

It should be noted that the first-level switch 200 is configured to turn on/off the dual-screen mirror mode of the terminal, and the second-level switch 202 is effective under the condition that the first-level switch 200 is turned on. Regarding this, it may be considered that the second-level switch 202 is in a subdirectory or menu after the first-level switch 200 is turned on, but is not limited thereto.

In the above terminal, the second-level switch 202 may be set under the first-level switch 200 so that the terminal enables or disables the privacy protection function through the second-level switch 202 under the condition that that the first-level switch 200 is turned on (i.e., the display mode of the terminal is set to the dual-screen mirror mode), thereby realizing protection to the privacy information, further ensuring information security of the user, and improving user experience. Therefore, the problem of leaked privacy information of a terminal in the dual-screen mirror mode in some cases can be solved.

It should be noted that the privacy protection module 22 may include: a privacy detection unit configured to detect whether the privacy information is present in content to be displayed by the terminal; and a privacy processing unit configured to protect the privacy information under a condition that presence of the privacy information is detected.

It should be noted that the privacy information may be default privacy information or user-defined privacy information. The default privacy information may be predefined in a system by a manufacturer, such as but not limited to, incoming call display, message display, status bar notifications, and the like. The user-defined privacy information may be keywords such as "money" and "password" defined by the user in a setting module (setting menu), for which the privacy detection module may perform keyword matching.

In an embodiment of the present disclosure, the privacy processing unit may include: a first notification unit configured to notify the setting module 20 to switch the display mode of the terminal from the dual-screen mirror mode to another display mode or to turn off the first-level switch 200.

In an embodiment of the present disclosure, the privacy processing unit may include: a second notification unit and a first display unit. The second notification unit is configured to notify the first display unit to process a first screen of the terminal. The first screen is a screen on which the privacy information needs to be protected. The first display unit is configured to perform at least one of: powering down the first screen, turning off backlight of the first screen and blurring display content on the first screen.

It should be noted that blurring the display content on the first screen may be regarded as blurring the privacy information in the display content on the first screen, such as providing an overlay layer, but is not limited thereto.

It should be noted that the first display unit may be further configured to identify a first screen and a second screen of the terminal, and after the first screen and the second screen of the terminal are identified, information on the first screen and the second screen may be uploaded to surfaceflinger of the system for storage.

In an embodiment of the present disclosure, the privacy protection module 22 may include: an acquisition unit and a second display unit. The acquisition unit is configured to acquire a designated signal. The designated signal carries location information of an area containing the privacy information. The second display unit is configured to blur display content in the area according to the location information.

It should be noted that the designated signal may be triggered by a touch operation on the area, such as selecting the area by touching the first screen, but is not limited thereto.

The method embodiment provided in embodiments of the present disclosure may be implemented in a mobile terminal, a computer terminal or other computation means. Taking running on a mobile terminal as an example, FIG. 3 is a structural block diagram of hardware in a mobile terminal implementing an information processing method according to an embodiment of the present disclosure. As shown in FIG. 3, a mobile terminal 30 may include one or more processors 302 (only one is shown)(the processor 302 may include, but is not limited to, a microprocessor (MCU) or a processing device of a programmable logic device such as FPGA), a memory 304 configured to store data, and a transmission means 306 for communication. It will be understood by those ordinary skilled in the art that the structure shown in FIG. 3 is merely illustrative, and does not form any limitation to the structure of the above mobile terminal. For example, the mobile terminal 30 may include more or fewer components than those shown in FIG. 3, or have a different configuration than that shown in FIG. 3.

The memory 304 is configured to store software programs of application software and modules, such as program instructions/modules corresponding to the information processing method in the embodiments of the present disclosure. The processor 302 executes the software programs and modules stored in the memory 304 to perform various functional applications and data processing, that is, implement the above method. The memory 304 may include a high speed random access memory and may also include a non-volatile memory such as one or more magnetic storage device, flash memory, or other non-volatile solid state memory. In some examples, the memory 304 may further include a memory remotely located relative to the processor 302, which memory may be connected to mobile terminal 30 via a network. Examples of such networks include, but are not limited to, the Internet, intranets, local area networks, mobile communication networks, and combinations thereof.

The transmission means 306 is configured to receive or transmit data via a network. Specific examples of such networks may include a wireless network provided by a communication provider of the mobile terminal 30. In an example, the transmission means 306 includes a Network Interface Controller (NIC) that may be connected to another network device through a base station to communicate with the Internet. In an example, the transmission means 306 may be a Radio Frequency (RF) module configured to communicate with the Internet wirelessly.

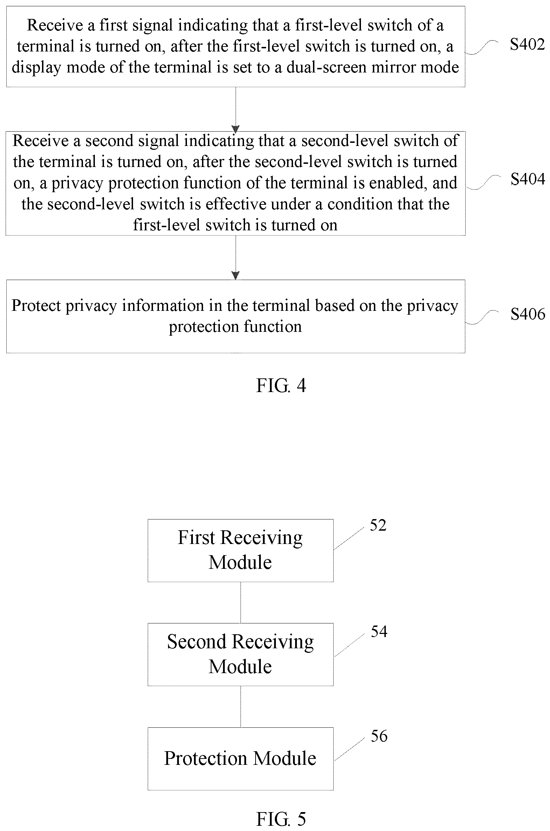

In an embodiment of the present disclosure, there is provided an information processing method run on the above mobile terminal. FIG. 4 is a flowchart of an information processing method according to an embodiment of the present disclosure. As shown in FIG. 4, the flow includes the following steps S402 to S406.

At step S402, a first signal indicating that a first-level switch of a terminal is turned on is received. After the first-level switch is turned on, a display mode of the terminal is set to a dual-screen mirror mode.

At step S404, a second signal indicating that a second-level switch of the terminal is turned on is received. After the second-level switch is turned on, a privacy protection function of the terminal is enabled, and the second-level switch is effective under a condition that the first-level switch is turned on.

At step S406, privacy information in the terminal is protected based on the privacy protection function.

Through these steps, the second-level switch may be set under the first-level switch so that the terminal enables or disables the privacy protection function through the second-level switch under the condition that that the first-level switch is turned on (i.e., the display mode of the terminal is set to the dual-screen mirror mode), thereby realizing protection to the privacy information, further ensuring information security of the user, and improving user experience. Therefore, the problem of leaked privacy information of a terminal in the dual-screen mirror mode in some cases can be solved.

It should be noted that the terminal may be a dual-screen terminal, or may be a terminal provided by the above embodiments, but is not limited thereto.

It should be noted that the above step S406 may be implemented in many manners. For example, it may be implemented through an automatic mode and a manual mode. For the automatic mode, in an embodiment of the present disclosure, the step S406 may include the following steps: detecting whether the privacy information is present in content to be displayed by the terminal; and protecting the privacy information under a condition that the privacy information is detected.

It should be noted that the privacy information may be default privacy information or user-defined privacy information. The default privacy information may be predefined in a system by a manufacturer, such as but not limited to, incoming call display, message display, status bar notifications, and the like. The user-defined privacy information may be keywords such as "money" and "password" defined by the user in a setting module (setting menu), for which the privacy detection module may perform keyword matching.

It should be noted that protecting the privacy information may be implemented in many manners. In an embodiment of the present disclosure, the step of protecting the privacy information may include: switching the display mode of the terminal from the dual-screen mirror mode to another display mode or turning off the first-level switch. In another embodiment of the present disclosure, protecting the privacy information includes at least one of: powering down a first screen of the terminal; turning off backlight of the first screen of the terminal; and blurring display content on the first screen of the terminal. The first screen is a screen on which the privacy information needs to be protected.

For the manual mode, the step S406 may include the following steps: acquiring a third signal which carries location information of an area containing the privacy information; and blurring display content in the area according to the location information.

It should be noted that the third signal may be triggered by a touch operation on the area, such as an operation of selecting the area by touching the first screen, but is not limited thereto.

The executor of the above steps may be a terminal, such as a dual-screen terminal, but is not limited thereto.

Those skilled in the art can clearly understand that the method according to the above embodiment may be implemented by means of software plus a necessary general hardware platform. Obviously, it may also be implemented by hardware. Based on such understanding, part of the technical solution of the present disclosure, which is essential, may be embodied in a form of a software product. The computer software product is stored in a storage medium (such as an ROM/RAM, a disk, or an optical disc) and includes a number of instructions for causing a terminal device (which may be a cell phone, a computer, a server, or a network device, etc.) to perform the methods of various embodiments of the present disclosure.

In an embodiment of the present disclosure, there is further provided an information processing device configured to implement the above embodiments. Details which have been explained will not be repeated here. As used below, the term "module" may be a combination of software and /or hardware that can realize a preset function. The devices described in the following embodiments are preferably implemented in software, but hardware, or a combination of software and hardware, is also possible and contemplated.

FIG. 5 is a structural block diagram of an information processing device according to an embodiment of the present disclosure. As shown in FIG. 5, the device includes: a first receiving module 52, a second receiving module 54, and a protection module 56.

The first receiving module 52 is configured to receive a first signal indicating that a first-level switch of a terminal is turned on. After the first-level switch is turned on, a display mode of the terminal is set to a dual-screen mirror mode.

The second receiving module 54 is connected to the first receiving module 52, and is configured to receive a second signal indicating that a second-level switch of the terminal is turned on. After the second-level switch is turned on, a privacy protection function of the terminal is enabled, and the second-level switch is effective under the condition that the first-level switch is turned on.

The protection module 56 is connected to the second receiving module 54, and is configured to protect privacy information in the terminal based on the privacy protection function.

In the above device, the second-level switch may be set under the first-level switch so that the terminal enables or disables the privacy protection function through the second-level switch under the condition that that the first-level switch is turned on (i.e., the display mode of the terminal is set to the dual-screen mirror mode), thereby realizing protection to the privacy information, further ensuring information security of the user, and improving user experience. Therefore, the problem of leaked privacy information of a terminal in the dual-screen mirror mode in some cases can be solved.

In an embodiment of the present disclosure, the protection module 56 may include: a detection unit configured to detect whether the privacy information is present in content to be displayed by the terminal; and a first protection unit connected to the detection unit, and configured to protect the privacy information under a condition that the privacy information is detected.

It should be noted that the privacy information may be default privacy information or user-defined privacy information. The default privacy information may be predefined in a system by a manufacturer, such as but not limited to, incoming call display, message display, status bar notifications, and the like. The user-defined privacy information may be keywords such as "money" and "password" defined by the user in a setting module (setting menu), for which the privacy detection module may perform keyword matching.

It should be noted that protecting the privacy information may be implemented in many manners. In an embodiment of the disclosure, the first protection unit is further configured to switch the display mode of the terminal from the dual-screen mirror mode to another display mode or turn off the first-level switch. In another embodiment of the disclosure, the first protection unit is further configured to perform at least one of: powering down a first screen of the terminal; turning off backlight of the first screen of the terminal; and blurring display content on the first screen of the terminal. The first screen is a screen on which the privacy information needs to be protected.

In an embodiment of the present disclosure, the protection module 56 may include: an acquisition unit configured to acquire a third signal which carries location information of an area containing the privacy information; and a second protection unit connected to the acquisition unit, and configured to blur display content in the area according to the location information.

It should be noted that the third signal may be triggered by a touch operation on the area, such as an operation of selecting the area by touching the first screen, but is not limited thereto.

The device may be located in the terminal, such as a dual-screen terminal, but is not limited thereto.

It should be noted that each of the above modules may be implemented by software or hardware. For the latter, it may be implemented by, but are not limited to: all of the above modules are located in the same processor; or the above modules are located in different processors in any combination.

In an embodiment of the present disclosure, there is further provided a storage medium including a program stored thereon. The program, when executed by a processor, causes the processor to implement any one of the methods according to the above embodiments.

In this embodiment, the storage medium may include, but is not limited to: a U disk, a read-only memory (ROM), a random access memory (RAM), a mobile hard disk, a disk or optical disk, and other media that can store a program code.

In an embodiment of the present disclosure, there is further provided a processor for executing a program. The program, when executed by the processor, causes the processor to implement any one of the methods according to the above embodiments.

Specific examples in this embodiment of the present disclosure may refer to the examples described in the foregoing embodiments, which will not be repeated herein.

For better understanding of the present disclosure, the present disclosure is further explained below in conjunction with exemplary embodiments.

In an embodiment of the present disclosure, there is provided a terminal. A switch is added in a setting mode of the terminal (for example, via the setting module 20 of the terminal), and in a case that a user uses a "dual-screen mirror mode", a "privacy protection" switch (e.g., the second-level switch described above) is turned on. In the automatic detection mode, a privacy detection module (e.g., the privacy detection unit described above) is started to check the display content; if privacy information is present, the system is notified to process the display of the second screen so that the privacy content is hidden. In the manual processing mode, the user may manually select an area on the display screen, which is then processed by the system to protect privacy within the area. Through the above two methods, the purpose of protecting privacy is achieved, and user experience is improved.

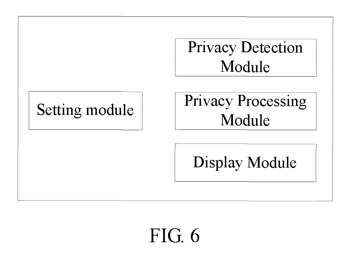

FIG. 6 is a structural block diagram of a terminal provided according to another embodiment of the present disclosure.

In the setting module, a "privacy protection" switch (e.g., the second-level switch 202) may be added under the "dual-screen mirror mode" switch (e.g., the first-level switch 200). The privacy protection switch may be turned on to enable the privacy protection function, and may be turned off to disable the privacy protection function.

The user may also customize the privacy content, or the like.

In the automatic mode, a privacy detection module (e.g., the privacy detection unit or the detection unit described above), a privacy processing module (e.g., the privacy processing unit or the first protection unit described above), and a display module (e.g., the first display unit and /or the second display unit described above) may be used.

The privacy detection module may be operated in a default mode or a user-defined mode. The privacy detection module may be a background service developed by a mobile phone manufacturer. If the default mode is adopted, the default privacy content is defined in the system by a mobile phone manufacturer, such as incoming call display, message display, status bar notifications, and the like, and the privacy detection module may register with corresponding modules. When there is a call, a message, a notification, or the like, the privacy detection module will receive a broadcast or other message, and thus knows that some privacy content (e.g., the privacy information described above) is about to be displayed. If the user-defined mode is adopted, the user is required to define the privacy in a setting menu (e.g., the setting module), for example, by setting keywords such as "money" and "password" as privacy. In this case, the privacy detection module performs keyword matching, and determines that a privacy content is included if keywords such as "money" and "password" are detected in the display content.

The privacy processing module may perform a processing after the privacy detection module detects the privacy information in the display content of the system. The privacy processing module may perform the following two operations: 1) notifying the setting module to switch the display mode, such as switching from the dual-screen mirror mode to a dual-screen wide screen mode; and 2) notifying the display module to process the display content.

The display module may identify the first screen and the second screen, and after information of the first screen and the second screen is operated by a linux kernel, the information is uploaded to surfaceflinger of Android system for storage. When privacy protection is needed, the system may process the first screen and /or the second screen. The display module may also process the display of the first screen. There may be many manners to do this, such as powering down the first screen, turning off backlight of the first screen, providing an overlay layer for the display content on the first screen in surfaceflinger to perform blurring, and so on.

For the manual mode, if privacy information is found in the display content in use by the user, an area containing the privacy information on the touch screen is selected, the touch screen reports coordinates through an android input subsystem, and the display module acquires the coordinate location information. Then, similarly to the method used in the automatic mode, an overlay layer may be provided for the display content on the second screen in surfaceflinger to perform blurring, thereby implementing privacy protection.

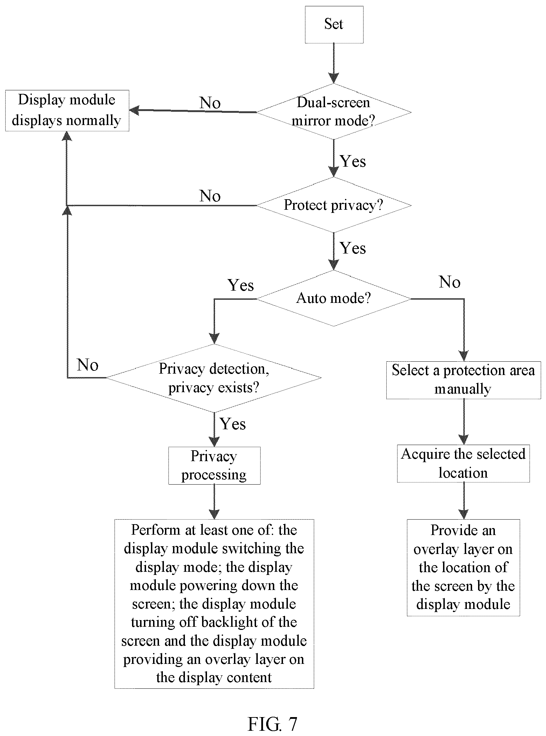

FIG. 7 is a schematic flowchart of an information processing method according to another embodiment of the present disclosure. As shown in FIG. 7, the method may include the following steps. For example, it is determined whether the terminal is in a dual-screen mirror mode, and if yes, it is determined whether a privacy protection switch is turned on. Under the condition that that the privacy protection switch is turned on, privacy protection is required and may be implemented by two modes: an automatic mode and a manual mode.

For the automatic mode, privacy detection may be performed to determine whether privacy information is present. If the privacy information is present, the privacy may be processed, for example, by switching the display mode via the setting module, or by powering down, or turning off backlight or an overlay layer for the first screen via the display module, and so on. If the privacy information is not present, normal display may be performed by the display module.

For the manual mode, the protection area may be manually selected to acquire a location of the selected area, and the overlay layer is arranged on the area via the display module.

Apparently, those skilled in the art should appreciate that the respective modules and steps in the present disclosure can be realized by using a general-purpose computing device; they can be integrated in a single computing device, or can be distributed on a network that consists of a plurality of computing devices. They can be realized by using the executable program code of the computing device, that they can be stored in a storage device and executed by the computing device, in some cases, can perform the shown or described steps in a sequence other than herein, or they are made into different integrated circuit modules respectively, or a plurality of modules or steps thereof are made into a single integrated circuit module, thus to be realized. In this way, the present disclosure is not restricted to any particular hardware and software combination.

The above are only exemplary embodiments of the present disclosure and are not intended to limit the present disclosure. Various modifications and alterations to this disclosure will become apparent to those skilled in the art. Any modification, equivalent replacement, improvement and the like made within the principle of the present disclosure should be included in the protection scope of the present disclosure.

## Claims

1. A terminal, comprising: a setting module and a privacy protection module, wherein
the setting module is provided with a first-level switch and a second-level switch, under a condition that the first-level switch is turned on, a display mode of the terminal is set to a dual-screen mirror mode, and the second-level switch is configured to enable or disable a privacy protection function under the condition that the first-level switch is turned on; and
the privacy protection module is connected to the second-level switch and configured to protect privacy information in the terminal based on the privacy protection function under a condition that the second-level switch is turned on.

2. The terminal according to claim 1, wherein the privacy protection module comprises:
a privacy detection unit configured to detect whether the privacy information is present in content to be displayed by the terminal; and
a privacy processing unit configured to protect the privacy information under a condition that presence of the privacy information is detected.

3. The terminal according to claim 2, wherein the privacy processing unit comprises:
a first notification unit configured to notify the setting module to switch the display mode of the terminal from the dual-screen mirror mode to another display mode or to turn off the first-level switch.

4. The terminal according to claim 2, wherein the privacy processing unit comprises a second notification unit and a first display unit;
the second notification unit is configured to notify the first display unit to process a first screen of the terminal, wherein the first screen is a screen on which the privacy information needs to be protected; and
the first display unit is configured to perform at least one of: powering down the first screen, turning off backlight of the first screen and blurring display content on the first screen.

5. The terminal according to claim 1, wherein the privacy protection module comprises an acquisition unit and a second display unit;
the acquisition unit is configured to acquire a designated signal, wherein the designated signal carries location information of an area containing the privacy information; and
the second display unit is configured to blur display content in the area according to the location information.

6. An information processing method, comprising:
receiving a first signal indicating that a first-level switch of a terminal is turned on, wherein after the first-level switch is turned on, a display mode of the terminal is set to a dual-screen mirror mode;
receiving a second signal indicating that a second-level switch of the terminal is turned on, wherein after the second-level switch is turned on, a privacy protection function of the terminal is enabled, and the second-level switch is effective under a condition that the first-level switch is turned on; and
protecting privacy information in the terminal based on the privacy protection function.

7. The method according to claim 6, wherein the step of protecting privacy information in the terminal based on the privacy protection function comprises:
detecting whether the privacy information is present in content to be displayed by the terminal; and
protecting the privacy information under a condition that the privacy information is detected.

8. The method according to claim 7, wherein the step of protecting the privacy information comprises: switching the display mode of the terminal from the dual-screen mirror mode to another display mode or turning off the first-level switch.

9. The method according to claim 7, wherein the step of protecting the privacy information comprises at least one of:
powering down a first screen of the terminal;
turning off backlight of the first screen of the terminal; and
blurring display content on the first screen of the terminal,
wherein the first screen is a screen on which the privacy information needs to be protected.

10. The method according to claim 6, wherein the step of protecting privacy information in the terminal based on the privacy protection function comprises:
acquiring a third signal which carries location information of an area containing the privacy information; and
blurring display content in the area according to the location information.

11. An information processing device, comprising:
a first receiving module configured to receive a first signal indicating that a first-level switch of a terminal is turned on, wherein after the first-level switch is turned on, a display mode of the terminal is set to a dual-screen mirror mode;
a second receiving module configured to receive a second signal indicating that a second-level switch of the terminal is turned on, wherein after the second-level switch is turned on, a privacy protection function of the terminal is enabled, and the second-level switch is effective under a condition that the first-level switch is turned on; and
a protection module configured to protect privacy information in the terminal based on the privacy protection function.

12. The device according to claim 11, wherein the protection module comprises:
a detection unit configured to detect whether the privacy information is present in content to be displayed by the terminal; and
a first protection unit configured to protect the privacy information under a condition that the privacy information is detected.

13. The device according to claim 11, wherein the protection module comprises:
an acquisition unit configured to acquire a third signal which carries location information of an area containing the privacy information; and
a second protection unit configured to blur display content in the area according to the location information.

14. A storage medium comprising a program stored thereon which, when executed by a processor, causes the processor to implement the method according to any one of claims 6 to 10.

15. A processor configured to run a program, wherein the program, when executed by a processor, causes the processor to implement the method according to any one of claims 6 to 10.
